# EUROPÄISCHE PATENTSCHRIFT

(11) **EP 2 515 084 B1**
(45) Veröffentlichungstag und Bekanntmachung des Hinweises auf die Patenterteilung: **10.08.2016**
(21) Anmeldenummer: 12162362.3
(22) Anmeldetag: 30.03.2012
(51) Int. Cl.: G01D 5/14, G01D 5/244, G01P 3/481, G01P 3/54

(54) **Verfahren für das Erfassen von Bewegungen eines Körpers mittels eines Segmentzählers und eines Feinpositionssensors**
Method for determining motion using a segment meter and a fine position sensor
Procédé destiné à la détermination d'un mouvement utilisant un compteur à segments et un capteur de position précis

(30) Priorität: 19.04.2011 DE 102011002179
(43) Veröffentlichungstag der Anmeldung: 24.10.2012
(73) Patentinhaber: Mehnert, Walter, 85521 Ottobrunn (DE); Theil, Thomas, 82340 Feldafing/Garatshausen (DE)
(72) Erfinder: Mehnert, Walter, 85521 Ottobrunn (DE); Theil, Thomas, 82340 Feldafing/Garatshausen (DE)
(74) Vertreter: Puschmann Borchert Bardehle Patentanwälte Partnerschaft mbB

(56) Entgegenhaltungen:
- EP-A1- 0 484 716
- EP-B1- 1 565 755
- DE-A1-102007 039 051
- DE-C1- 3 408 478
- DE-C1- 4 407 474

## Beschreibung

Die Erfindung betrifft Verfahren zur Synchronisation eines Segmentzählers, der mindestens einen Impulsdraht-(Wieganddraht)-Sensor aufweist, mit einem Feinpositionssensor für das absolute Erfassen von translatorischen und/oder rotatorischen Bewegungen eines Körpers.

Impuls- und Wiegand-Drähte sind ferromagnetische Elemente, die in ihrer Ausbildung als Wiegand-Sensoren jeweils von einer Sensorspule umwickelt sind. Die im ferromagnetischen Material zunächst unregelmäßig orientierten magnetischen Bereiche - als magnetische Domänen oder auch als Weiß'sche Bereiche bezeichnet - richten sich unter dem Einfluss äußerer Kräfte zu einer einzigen Domäne aus. Beim Anlegen eines äußeren Magnetfeldes von bestimmter Richtung und Größe "klappt" diese Domäne "schlagartig um", was zu einem als Ausgangssignal abnehmbaren Spannungsimpuls in der Sensorspule führt. Die kinetische Energie der in Form einer fortlaufenden Welle in Richtung des äußeren Feldes umklappenden Elementarmagnete ist groß genug, um aus der dem Wiegand-Sensor zugeordneten Spule nicht nur elektrische Energie für einen Signalimpuls, sondern auch für eine Zählelektronik mit Speicher zu entnehmen; vgl. EP 0 724 712 B1 [0009].

In ferromagnetischen Materialien ist die Wechselwirkung der magnetischen Momente benachbarter Atome mit unterschiedlicher Magnetisierungsrichtung sehr stark, was zur Ausrichtung der Momente in den genannten Weiß'schen Bereichen führt, die durch als Blochwände bezeichnete Übergangsschichten voneinander getrennt sind. Es ist nun möglich, durch z. B. mechanische Streckung eines solchen als Draht ausgebildeten ferromagnetischen Elementes, eine einzige Domäne einheitlicher Magnetisierungsrichtung dauerhaft auszubilden. Wird eine solche Domäne in ein äußeres magnetisches Feld bestimmter Größe und Richtung gebracht, dann klappt diese Domäne nicht als Ganzes um, sondern ihre Elementarmagnete klappen von einer bestimmten Ausgangsposition aus - vorzugsweise einem Drahtende - dominoartig in Richtung des äußeren Magnetfeldes. Dies führt zu einer Umklappwelle endlicher Geschwindigkeit in dem ferromagnetischen Element, die aber groß gegenüber der Geschwindigkeit des erregenden Magneten ist, so dass von einem "schlagartigen Umklappen" dieser Domäne gesprochen werden darf.

Die Auslöserichtung der Ummagnetisierung darf hierbei aber nicht verwechselt werden mit der Richtung der Ummagnetisierung selbst. Die Auslöserichtung beschreibt, zu welchem Magnetpol hin die Weiß'schen Bereiche "umklappen". Die Richtung der Ummagnetisierung führt dagegen zur Polarität des auslösenden Poles des Erregermagneten (Nord oder Süd) und damit zur Magnetisierungsrichtung des Impulsdrahtes.

Es ist bekannt, zur Ermittlung der für eine korrekte Zählung notwendigen Information über die Polarität und die Position der Erregermagneten dem ferromagnetischen Element ein zusätzliches Sensorelement zuzuordnen, so dass die Information zum Zeitpunkt der Auslösung des ferromagnetischen Elements als vollständige Informationen zur Bestimmung der Bewegungsrichtung der Erregermagneten in den erzeugten Spannungsimpulsen zur Verfügung stehen; vgl. EP 1 565 755 B1.

Die Qualität der von solchen Wiegand-Sensoren erzeugten Zählimpulse hängt stark von der zuvor aufgetretenen Magnetfeldstärke ab. Ein optimaler Zählimpuls kann nur erzielt werden, wenn vor der Auslösung in einer Magnetfeldrichtung die Sättigungsfeldstärke in der Gegenrichtung erzielt wurde; wird dies nicht erreicht, kann es vorkommen, dass der Betrieb von einem bipolaren in den unipolaren Betrieb wechselt, bei dem nur Zählimpulse in einer Richtung genügend Energie abgeben können.

Die daraus resultierenden Zustände widersprechen der Forderung nach einer absoluten Positionsbestimmung mittels Positionsdetektoren mit Wiegand-Sensoren. Es können nämlich von der letzten von einem dem Positionsdetektor zugeordneten Zähler erfassten Position zu der nach seinem erneuten Wirksamwerden sich ergebenden aktuellen Position unterschiedliche Bewegungsmöglichkeiten - rechts/links, vorwärts/rückwärts - vorausgegangen sein, die infolge eines nicht optimalen Zählimpulses das Messergebnis verfälschen. Erst eine weitere Bewegung des Magnetfeld erzeugenden Permanentmagneten, die zum Auslösen eines Zählimpulses führt, beendet diese Ungewissheit. Es ist aber nicht immer möglich, eine solche Bewegung zu erzwingen.

Einfache Segmentzähler können mit dieser Ungewissheit, die im Bereich von bis zu zwei Segmenten liegen kann, einwandfrei arbeiten. Anders verhält es sich bei der Kopplung eines solchen Segmentzählers mit einem Feinpositionsgeber. Hier muss der periodisch auftretende Feinpositionswert exakt einem Segment zugeordnet werden, um einen widerspruchsfreien Gesamtpositionswert zu garantieren. Dazu ist die genaue Kenntnis des Bewegungsablaufs zwischen dem letzten vom Segmentzähler erfassten Ereignis und der aktuellen Position zwingend erforderlich. Diese Kenntnis wird auch nicht durch das zusätzliche Sensorelement nach der EP 1 565 755 B1 vermittelt, da dieses nur die Polarität des Erregermagneten zum Zeitpunkt einer Triggerung des Wiegangddrahtes für die vorzeichenrichtige Zählung ermittelt.

Aus der US 7,559,012 B2 ist es zum Beispiel bekannt mit Hilfe zweier Wiegand-Sensoren einen richtungsabhängigen Zähler aufzubauen, der in Verbindung mit einer zugeordneten Logik die in Folge einer Richtungsumkehr des erregenden Magnetfeldes nicht optimalen beziehungsweise fehlenden Zählimpulse korrigiert. Jedoch kann diese Korrektur erst nach dem zweiten auf den fehlenden Zählimpuls erzeugten neuen Zählimpuls erfolgen. Bleibt der zu überwachende Körper aber stehen, bevor dieser zweite Zählimpuls ausgelöst wurde, kann eine solche Korrektur nicht erfolgen und das Zählergebnis ist noch falsch beziehungsweise ungenau.

Ferner ist gemäß der DE 44 07 474 C1 ein Drehwinkelsensor zur Messung der Winkelstellung einer Drehwelle über mehr als eine Umdrehung bekannt geworden, der für ein fehlerfreies Arbeiten mindestens drei auf dem Kreisumfang der Drehwelle, deren Position zu bestimmen ist, angeordnete Impulsdraht-Sensoren benötigt. Eine Anordnung gemäß Fig. 3 dieser Patentschrift DE 44 07 474 C1 mit nur zwei Impulsdraht-Sensoren hat die gleichen Unzulänglichkeiten wie im Absatz zuvor für die US 7,559,012 B2 beschrieben. Um die für eine richtige Zählung notwendigen Informationen mit weniger als drei der Impulsdraht-Sensoren zu erreichen, sind wie in Fig. 4 dieser DE 44 07 474 C1 gezeigt weitere Rücksetzdauermagnete erforderlich, was einen erheblichen Bauaufwand erfordert. Im Übrigen liefert die dort von den Spulen 90 und 91 getrennte Anordnung des Impulsdrahtes 96 aufgrund der unzureichenden magnetischen Kopplung nicht genügend Energie für die eigentliche Aufgabenstellung!

Ein weiterer einen Impulsdraht-(Wiegand)-Sensor aufweisender Positionsdetektor ist durch die EP 1 565 755 B1 bekannt geworden, dessen ferromagnetischem Element 2 als Spulen ausgebildete Sensorelemente zugeordnet sind. Dabei ist die zweite Spule aber vorrangig für die Ermittlung der Drehrichtung vorgesehen. Mit Hilfe eines in die eine Spule eingespeisten Stromes kann abhängig von der Magnetisierung des ferromagnetischen Elementes in der anderen Spule zwar ein Spannungsimpuls ausgelöst werden, es fehlt aber jeder Hinweis darauf, welche Information dabei gewonnen wird und wie diese Information verarbeitet werden muss.

Schließlich ist durch die DE 10 2007 039 051 A1 ein feinauflösender Segment- oder Umdrehungszähler bekannt geworden, bei dem durch ein zusätzliches dem ferromagnetischen Element zugeordnetes Sensorelement die Polarität und die Position des Erregermagneten zum Zeitpunkt der Auslösung eines Impulses ermittelbar ist. Aber auch hier ist für ein fehlerfreies Arbeiten des Umdrehungszählers eine vorausgehende optimale Vorspannung für das richtige Arbeiten der zur Anwendung gelangenden Wiegand-Elemente erforderlich.

Der Erfindung liegt die Aufgabe zugrunde, hier Abhilfe zu schaffen durch ein neues bauraum- und kostensparendes Verfahren für die korrekte Überführung der Werte eines Segmentzählers auf der Basis von Wiegand-Sensoren mit den Werten eines Feinpositionssensors sowie durch Vorrichtungen zur Durchführung des Verfahrens.

Zur Lösung schlägt die Erfindung ein Verfahren nach Patentanspruch 1 vor. Dieses geht aus von der Überlegung, dass auch dann, wenn der letzte generierte Impuls für eine Zählung zu schwach gewesen ist, der Erregermagnet seit dem letzten gezählten Impuls zur aktuellen Position dabei so an dem Wiegand-Sensor vorbeigeführt worden ist, dass der Wiegand-Sensor für einen neuen Impuls vorgespannt ist, wobei die Magnetisierungsrichtung dieser Vorspannung des Wiegand-Drahtes von dem beschriebenen Weg des Erregermagneten abhängig ist.

Diese für eine korrekte Überführung in einen Gesamtpositionswert notwendige Information über die Bewegungsvorgeschichte des mit dem zu überwachenden Körper fest gekoppelten Magneten für die Auflösung der Mehrdeutigkeit des Zählvorgangs ist also in der Magnetisierungsrichtung des Impulsdrahtes enthalten. Der Impulsdraht des Wiegand-Sensors besitzt nämlich magnetische Bereiche, in denen die letzte Vorspannungsrichtung auch dann gespeichert ist, wenn kein idealer Impuls ausgelöst wurde. Unter Nutzung der Kenntnis dieser Magnetisierungsrichtung ist eine korrekte Zuordnung der von Positionsdetektor gezählten Umdrehungen beziehungsweise Segmente widerspruchsfrei möglich, so dass bei Verwendung des Segmentgebers mit einem Feinpositionsgeber aus den Zählwerten des Wiegand-Sensors und den Positionswerten des Feinpositionssensors stets ein absoluter Gesamtpositionswert gebildet werden kann. In einer hier nicht explizit aufgeführten Tabelle sind die Bedingungen abgelegt, unter welchen von den in einem Zähler abgespeicherten Werten des Wiegand-Sensors eine Umdrehung beziehungsweise ein Segment dazugezählt bzw. abgezogen werden muss.

Nach einem weiteren Merkmal der Erfindung mit zwei auf den Impulsdraht gewickelten Induktionsspulen ist die Magnetisierungsrichtung des Impulsdrahtes durch externes definiertes Bestromen einer ersten Spule und Messung der Reaktion des Impulsdrahtes an der zweiten Spule feststellbar, wobei das Reaktionssignal, Auslöseimpuls vorhanden oder nicht, zur Weiterverarbeitung der Auswerteelektronik zuführbar ist.

Nach einem weiteren Merkmal der Erfindung mit nur einer auf den Impulsdraht gewickelten Induktionsspule wird die Information über die letzte Magnetisierungsrichtung des Impulsdrahtes durch externes Bestromen der dem Impulsdraht zugeordneten Induktionsspule gemäß einer vordefinierten Funktion, vorzugsweise einer ansteigenden und abfallenden Rampe, und der Auswertung des Reaktionssignals an derselben Spule gewonnen.

Nach einem weiteren Merkmal der Erfindung wird die den Impulsdraht jeweils kennzeichnende Magnetisierungsrichtung durch mindestens einer diesem zugeordneten magnetfeldempfindlichen Sonde gewonnen.

Nach einem weiteren Merkmal der Erfindung wird als magnetfeldempfindliche Sonde für die Erkennung der Magnetisierungsrichtung des Impulsdrahtes eine Hall-Sonde oder ein GMR-Sensor verwendet. Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugszeichen verwendeten Begriffe und zugeordneten Bezugszeichen verwendet. Es zeigen:
- Fig. 1: Bewegungsbilder mit Bewegungsvariante 1 und Bewegungsvariante 2 eines Segmentzählers unter Verwendung jeweils zweier Wiegand-Sensoren;
- Fig. 2: den Bewegungsbildern gemäß Fig.1 zugeordneten Signale der zwei Wiegand-Sensoren über der Zeit t;
- Fig. 3: ein erstes Ausführungsbeispiel des Segmentzählers zur Durchführung des erfindungsgemäßen Verfahrens mit zwei Wiegand-Sensoren mit jeweils zwei Induktionsspulen;
- Fig. 4: ein zweites Ausführungsbeispiel des Segmentzählers zur Durchführung des erfindungsgemäßen Verfahrens mit zwei Wiegand-Sensoren mit jeweils einer Induktionsspule und jeweils einem magnetfeldempfindlichen Sensor;
- Fig. 5: ein Blockschaltbild für das Ausführungsbeispiel nach Fig.3;
- Fig. 6: ein Blockschaltbild für das Ausführungsbeispiel nach Fig.4., und
- Fig. 7: ein Blockschaltbild für ein Ausführungsbeispiel der Erfindung mit nur einem Wiegand-Sensor.

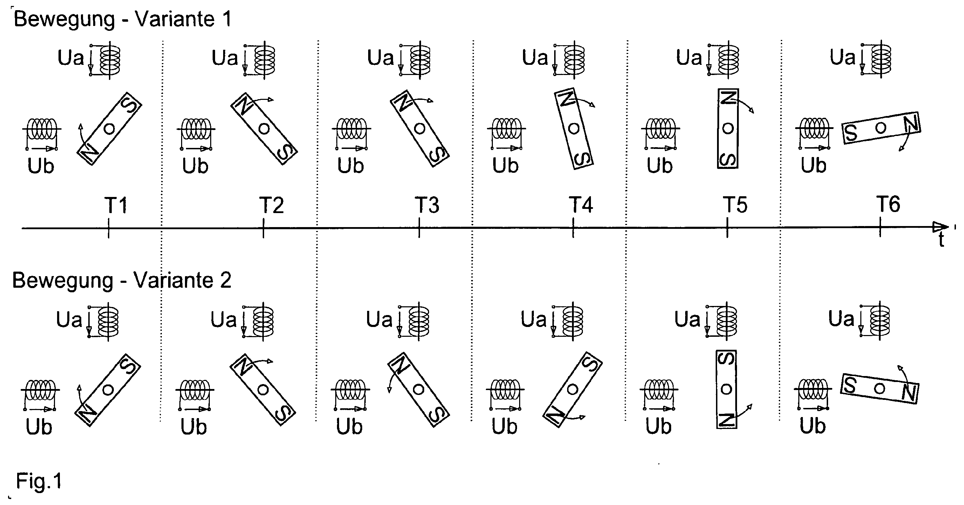

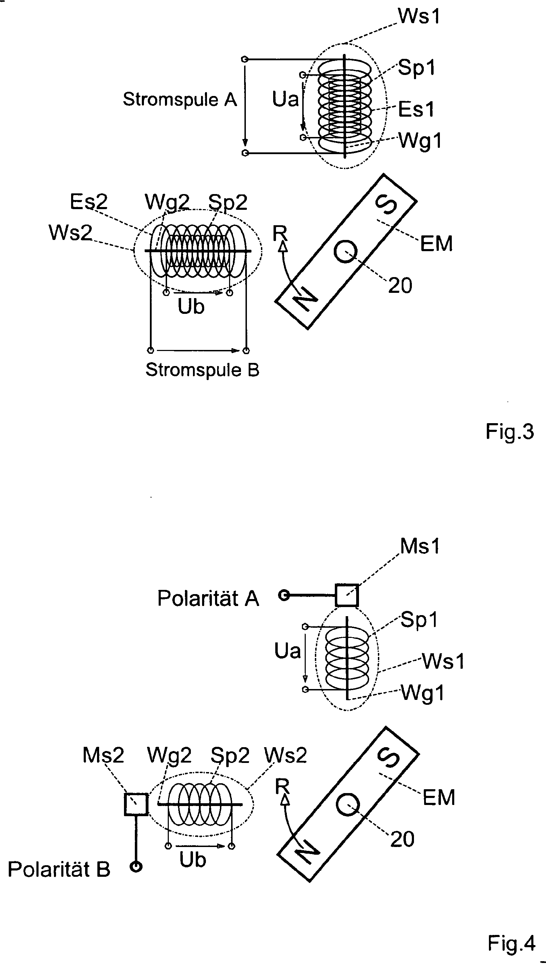

Zwecks besserem Verständnis der Erfindung sind in Figur 1 die Bewegungsbilder - Variante 1 ohne Richtungsumkehr und Variante 2 mit Richtungsumkehr - eines Segmentzählers mit zwei Wiegand-Sensoren gemäß Fig.4 gezeigt, wobei die Positionsveränderungen eines mit der Bewegung eines zu detektierenden drehbaren Körpers verbundenen, die Pole N und S aufweisenden Permanentmagneten EM für die auf einer Zeitachse t angegebenen Zeitpunkte T1 bis Tx gezeigt sind. Den Wiegand-Sensoren sind - wie bekannt - Induktionsspulen SP zugeordnet, an denen Signale in Form von Spannungssignalen Ua/Ub abgreifbar sind.

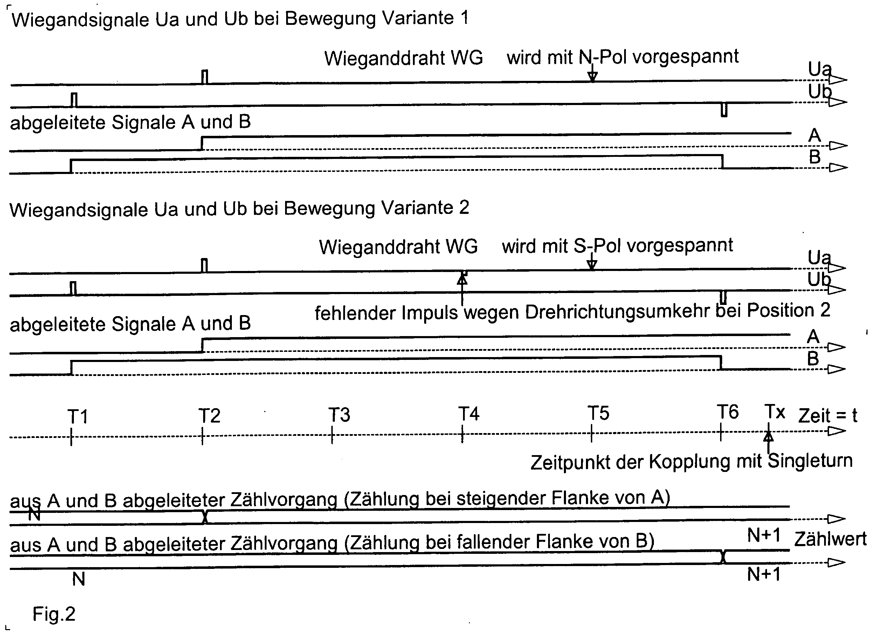

In Fig. 2 sind die dazugehörigen Signale Ua und Ub der Wiegand-Sensoren über der Zeit t in der Variante 1 ohne Richtungsumkehr - kein Fehlimpuls - und in der Variante 2 - mit Richtungsumkehr und Fehlsignal - als Diagramm dargestellt. Ferner sind die zugehörigen für die Zählung ausgewerteten Signale A und B sowie der daraus resultierende Zählwert über der Zeit t angeführt. Dabei sind zwei gängige Zählversionen aufgezeigt, bei denen die Zählung entweder beim Eintritt in das neue Segment, also der steigenden Flanke von A, oder beim Verlassen des vorhergehenden Segmentes, also bei der fallenden Flanke von B, erfolgt. In beiden Fällen ist die Zählung von N auf (N+1) zum Zeitpunkt Tx bereits erfolgt.

Die Fig. 1 und Fig. 2 zeigen einerseits, dass in der Bewegungsvariante 1 zu den Zeitpunkten T1 bis T6 in Folge ausreichend vorhandener magnetischer Feldstärken exakte Wiegand-Signale A und B erzeugt werden, andererseits aber bei Bewegungsvariante 2 in Folge der Drehrichtungsumkehr des zu detektierenden Körpers bei T3 die Vorspannung des Wiegand-Drahtes Wg unvollständig ist, so dass der zugeordnete Wiegand-Impuls bei T4 verkümmert und damit nicht erkennbar ist. Dies führt zur unerwünschten Verfälschung des Zählwertes, der in beiden Bewegungsvarianten bei Tx den Wert (N+1) annimmt, obwohl er bei der Bewegungsvariante 2 eigentlich N betragen müsste.

In beiden Varianten ist ein positiver Impuls bei T2 der letzte erkannte und ausgewertete Impuls von Ua und ein negativer Impuls bei T6 der letzte erkannte und ausgewertete Impuls von Ub. Der Unterschied bei den beiden Varianten ist die magnetische Vorspannung des Wiegand-Drahtes Wg bei T5, die aber bekannt ist und erfindungsgemäß verwendet wird. In der eingangs erwähnten Tabelle ist für den hier vorliegenden Fall der in Fig. 1 gezeigten Endstellung (Nordpol des Magneten EM an der dem Sensor B abgewandten Seite) zum Zeitpunkt Tx die im Zähler abgespeicherte Information über den aktuellen Wert von A und B abgelegt, so dass der Zählerstand bei mit Nordpol vorgespanntem Wieganddraht Wg direkt eingesetzt werden kann, während der Zählerstand bei mit Südpol vorgespanntem Draht Wg zuerst um "1" dekrementiert werden muss, um einen korrekten Gesamtpositionswert zu erhalten. Für alle anderen, hier nicht explizit gezeigten, Bewegungsabläufe und den daraus resultierenden Zuständen für A, B, den Magnetisierungsrichtungen der Wiegand-Drähte und dem Zählerstand sind entsprechende Korrekturinformationen in einer Tabelle abgelegt.

In Fig. 3 ist eine Variante gezeigt, bei der die Wiegand-Drähte Wg1IWg 2 von jeweils zwei konzentrischen Spulen umwickelt sind, von denen zum Beispiel die drahtnahen Spulen Sp1/Sp2 für die Reaktion auf die Bestromung der drahtfernen Spulen Es1/Es2 genommen werden. Eine Anordnung von zwei nebeneinander angebrachten Spulen ist ebenfalls geeignet. Für die Auswertung der normalen, durch die Bewegung des Magneten ausgelösten, Impulse kann sowohl die eine, als auch die andere oder sogar beide Spulen gemeinsam verwendet werden. Die Bestromung erfolgt vorteilhafterweise rampenförmig ansteigend und abfallend, um sowohl eine direkte Überkopplung zwischen den Spulen gering zu halten als auch einen ausgelösten Impuls, z. B. anhand der Flankensteilheit sicherer erkennen zu können.

In Fig. 4 ist jeweils anstelle einer zweiten Spule ein magnetfeldempfindlicher Sensor Ms1/Ms2 verwendet. Dieser misst die Magnetisierungsrichtung des jeweiligen Wiegand-Drahtes Wg1/Wg2 direkt.

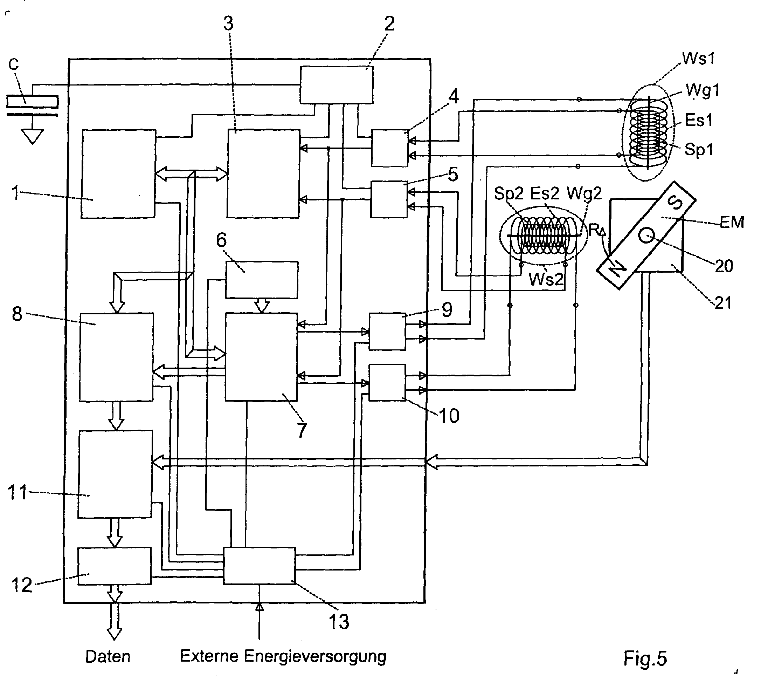

Zur Auswertung der Zählsignale der einen Segmentzähler bildenden Wiegand-Sensoren Ws1/Ws2 und der Positionswerte eines Feinpositionsgebers 21 zwecks Bildung des jeweiligen Gesamtpositionswertes eines bewegten Körpers - hier der Einfachheit halber eine Drehbewegung -, welche mit der Drehachse 20 des zu überwachenden Körpers verbunden sind, dient beispielsweise die als Blockschaltbild dargestellte Anordnung nach Figur 5.

Hierzu sind die Signalleitungen der Wiegand-Sensoren Ws1/Ws2 über Signal-Auswerteschaltungen 4 und 5 mit einer Zählerlogik 3 und mit einer Synchronisierungslogik 7 verbunden, die von einer Tabelle 6 gespeist wird, wobei durch die Stromgeneratoren 9, 10 das Bestromen der Wiegand-Draht fernen Induktionsspulen Es1/Es2 beider Wiegand-Sensoren erfolgt.

Der Zählerlogik 3 sind ein nicht flüchtiger Speicher 1 sowie die Korrekturlogik 8 und eine Logik 11 zur Verknüpfung der Zählersignale der Wiegand-Sensoren Ws1/Ws2 und des Feinpositionsgebers 21 zugeordnet. Die vorstehend genannten Schaltungselemente werden wie bekannt durch die Eigenenergie-Quelle 2 beziehungsweise von einer Fremdenergie-Quelle 13 versorgt. Über eine Schnittstelle 12 kann der ermittelte Gesamtpositionswert abgenommen werden. Über einen Kondensator C wird die von den Wiegand-Sensoren erzeugte Energie gespeichert.

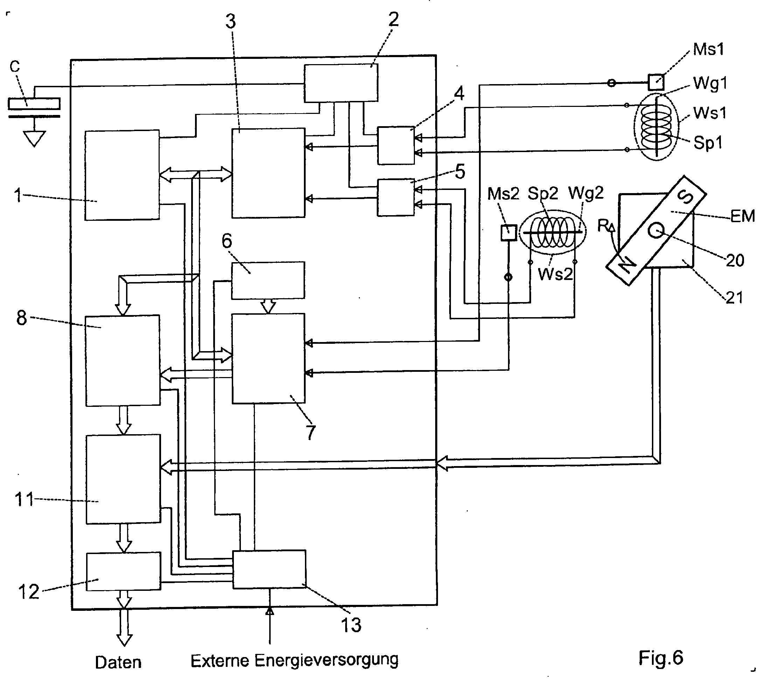

In Fig. 6 ist das entsprechende Blockschaltbild unter Verwendung einer Anordnung nach Fig. 4 gezeigt. Alle Schaltelemente tragen daher die gleichen Bezeichnungen.

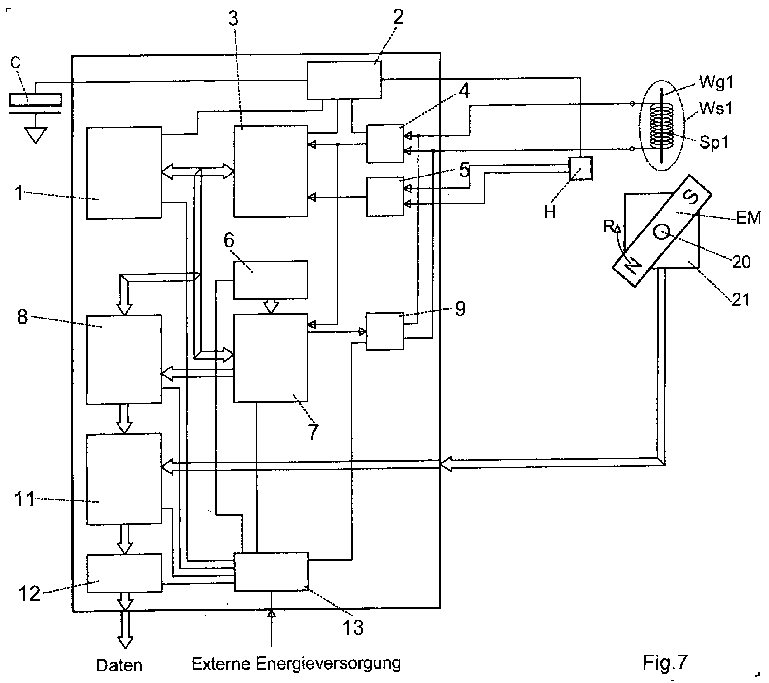

In Fig. 7 ist die Anordnung unter Verwendung von nur einem Wiegand-Sensor (zum Beispiel gemäß der EP 1 565 755 B1) gezeigt. Hier wird die eine Spule sowohl für die Auswertung der Impulse als auch für die Einspeisung eines Erregerstromes verwendet. Die Unterscheidung und damit Erkennung eines Impulses von den durch die Einspeisung erzeugten Spannungssignalen erfolgt dabei gemäß von in der Messtechnik gebräuchlicher Verfahren zum Beispiel anhand unterschiedlicher Amplituden oder Anstiegszeiten.

Für den in Fig. 5 bis Fig. 7 gezeigten Feinpositionssensor 21 kann jeder der bekannten und auf dem Markt erhältlichen Sensoren, sei er optisch, magnetisch, kapazitiv oder anderweitig realisiert, eingesetzt werden.

Allen Vorrichtungen gemäß der Erfindung (Fig. 5, Fig. 6 und Fig. 7) ist gemeinsam, dass über eine Auswertung der Impulse von den Wiegand-Sensoren sowohl bei vorhandener externer Versorgungsspannung als auch im eigenversorgten Betrieb (vgl. US 6,612,188 B2 oder EP 0 724 712 B1 oder EP 1 565 755 B1) mit Hilfe der genannten Signalauswerteschaltungen 4, 5 und der Zähliogik 3 im nichtflüchtigen Speicher 1 ein fortlaufender Segmentzählwert abgelegt wird.

Gemäß Fig. 5 und Fig. 7 steuert bei jedem Einschalten der externen Versorgungsspannung die Auswertelogik 7 die entsprechenden Stromgeneratoren 9, 10 an und ermittelt aus den Reaktionen der Wiegand-Drähte, den abgespeicherten Daten, der aktuellen Position des Feinpositionsgebers und der Korrekturtabelle 6 einen Korrekturwert. Der dementsprechend korrigierte Zählerstand 8 des Segmentzählers wird anschließend in einer einfachen Logik 11 mit den Werten des Feinpositionsgebers zu einem Gesamtpositionswert verbunden und letzterer über die Schnittstelle 12 ausgegeben. Solange die externe Versorgung gewährleistet ist, wird dieser Wert dann kontinuierlich der Bewegung des zu überwachenden Körpers nachgeführt und entspricht damit der geforderten absoluten Position.

Bei der in Fig. 6 gezeigten Vorrichtung erfolgt die Initialisierung entsprechend, allerdings entfällt hier die Bestromung und es wird die Magnetisierungsrichtung der Wiegand-Drähte Wg1/Wg2 direkt den Signalen der zugeordneten magnetfeldempfindlichen Sensoren Ms1/Ms2 entnommen.

Obwohl in den Figuren aus Gründen der einfacheren Darstellung nur Anordnungen für die Messung einer Rotation gezeigt werden, sind das Verfahren und die Vorrichtungen genauso für die Messung einer linearen Bewegung geeignet.

## Patentansprüche

1. Verfahren zur Überführung des Zählwertes eines mindestens einen Wiegand-Sensor (Ws) aufweisenden, die Positionsänderung eines sich translatorisch und/oder rotatorisch bewegenden, mit einem Erregermagneten (EM) fest gekoppelten Körpers, detektierenden Segmentzählers, dessen Zählwerte in einem Speicher (1) abgelegt werden, mit dem Positionswert eines die Bewegungen des Körpers erfassenden Feinpositionssensors (21) zu einem widerspruchsfreien Gesamtpositionswert, **dadurch gekennzeichnet, dass** eine Verfälschung des Zählwertes dadurch korrigiert wird, dass die Magnetisierungsrichtung des Wieganddrahtes (Wg1, Wg2) des Wiegand-Sensors (Ws1, Ws2) bestimmt wird und dass zu einem Zeitpunkt Tx anhand der Magnetisierungsrichtung des Wieganddrahtes (Wg1, Wg2), dem letzten Zählwert des Segmentzählers aus dem Speicher (1) und der Information des Feinpositionssensors (21) über das aktuelle ≤ halbe Segment bestimmt wird, ob der Zählwert aus dem Speicher (1) direkt eingesetzt werden kann oder ob zu dem Zählwert des Speichers (1) "1" dazugezählt beziehungsweise abgezogen werden muss, wobei zur Bestimmung, ob der Zählwert aus dem Speicher (1) direkt eingesetzt werden kann oder ob zu dem Zählwert des Speichers (1) "1" dazugezählt beziehungsweise abgezogen werden muss, eine Tabelle (6) ausgelesen wird, in der für alle Bewegungsabläufe und Endstellungen des Erregermagneten (EM) zum Zeitpunkt Tx anhand des aus dem Wiegandsignal (Ua, Ub) für die Zählung abgeleiteten Signals (A, B), der Magnetisierungsrichtung des Wieganddrahtes (Wg1 Wg2) und des letzten Zählerstands entsprechende Korrekturinformationen abgelegt sind.

2. Verfahren nach Anspruch 1, **dadurch gekennzeichnet, dass** zur Bestimmung der Magnetisierungsrichtung eine den Wieganddraht (Wg1, Wg2) umgebende Induktionsspule definiert bestromt wird, um festzustellen, ob die Elementarmagnete des Wieganddrahtes (Wg1, Wg2) zum Umklappen gebracht werden, wobei ein Reaktionssignal, Auslöseimpuls vorhanden oder nicht, zur Weiterverarbeitung an eine Auswerteelektronik (1 bis 13) zugeführt wird.

3. Verfahren nach Anspruch 2, **dadurch gekennzeichnet, dass** der Wiegand-Sensor (Ws1, Ws2) eine erste und eine zweite auf den Wieganddraht (Wg1, Wg2) gewickelte Induktionsspule aufweist, wobei die erste Induktionsspule (Es1, Es2) bestromt wird und ein Auslöseimpuls an der zweiten Induktionsspule (Sp1, Sp2) gemessen wird.

4. Verfahren nach Anspruch 2, **dadurch gekennzeichnet, dass** der Wiegand-Sensor (Ws1, Ws2) nur eine auf den Wieganddraht (Wg1, Wg2) gewickelte Induktionsspule (Sp1, Sp2) aufweist, wobei diese Induktionsspule sowohl für die Bestromung als auch für die Messung des Auslöseimpulses verwendet wird.

5. Verfahren nach Anspruch 2 bis 4, **dadurch gekennzeichnet, dass** die Bestromung der Induktionsspule rampenförmig ansteigend und abfallend erfolgt.

6. Verfahren nach Anspruch 1, **dadurch gekennzeichnet, dass** die Magnetisierungsrichtung des Wieganddrahts (Wg1, Wg2) durch mindestens einen dem Wieganddraht (Wg1, Wg2) zugeordneten magnetfeldempfindlichen Sensor (Ms1, Ms2) gemessen wird.

7. Verfahren nach Anspruch 6, **dadurch gekennzeichnet, dass** als magnetfeldempfindlicher Sensor eine Hall-Sonde oder ein GMR-Sensor verwendet wird.

## Claims

1. Method for combining the counter value of a segment meter which includes at least one Wiegand sensor (Ws) and which detects any change in position of a translationally and/or rotationally moving body that is firmly coupled to an exciter magnet (EM), which counter values are stored in a memory (1), with the position value of a fine position sensor (21) which detects said body motion, to give a consistent overall position value, **characterized in that** any distortion of the counter value is corrected by determining the direction of magnetization of the Wiegand wire (Wg1, Wg2) of said Wiegand sensor (Ws1, Ws2) and by determining, at a time Tx, based on the direction of magnetization of the Wiegand wire (Wg1, Wg2), on the last counter value of the segment meter from the memory (1), and on the information of the fine position sensor (21) about the current ≤ half segment, whether the counter value from the memory (1) can be directly used or whether "1" needs to be added to, or subtracted from, the counter value from the memory, whereby for determining whether the counter value from the memory (1) can be directly used or whether "1" needs to be added to, or subtracted from, the counter value from the memory, a table (6) is read which stores appropriate correction information for all motion sequences and final positions of the exciter magnet (EM) at time Tx based on the signal (A, B) derived from the Wiegand signal (Ua, Ub) for the count, on the direction of magnetization of the Wiegand wire (Wg1, Wg2) and on the last counter reading.

2. Method as claimed in claim 1, **characterized in that**, for determining the direction of magnetization, the induction coil surrounding said Wiegand wire (Wg1, Wg2) is energised in a defined manner in order to determine whether this will cause tilting of the elementary magnets of the Wiegand wire (Wg1, Wg2), and any reaction signal, in the presence or absence of a trigger pulse, is then fed to electronic evaluation equipment (1 to 13) for further processing.

3. Method as claimed in claim 2, **characterized in that** the Wiegand sensor (Ws1, Ws2) includes first and second induction coils wound on the Wiegand wire (Wg1, Wg2), with said first induction coil (Es1, Es2) being the coil which is energized and said second induction coil (Sp1, Sp2) being used for measuring a trigger pulse.

4. Method as claimed in claim 2, **characterized in that** the Wiegand sensor (Ws1, Ws2) includes only one induction coil (Sp1, Sp2) wound on the Wiegand wire (Wg1, Wg2), with said induction coil being used both as the energized coil and for measuring the trigger pulse.

5. Method as claimed in claims 2 to 4, **characterized in that** the energizing current supplied to the induction coil ramps up and down.

6. Method as claimed in claim 1, **characterized in that** the direction of magnetization of the Wiegand wire (Wg1, Wg2) is measured by at least one magnetic-field sensitive sensor (Ms1, Ms2) associated with the Wiegand wire (Wg1, Wg2).

7. Method as claimed in claim 6, **characterized in that** a Hall effect sensor or a GMR sensor are used as the magnetic field-sensitive sensor.

## Revendications

1. Procédé pour le transfert de la valeur comptée d'un compteur des segments, comprenant au moins un capteur Wiegand (Ws) et détectant le changement de position d'un corps qui se déplace de manière translative ou rotative et couplé de manière fixe à un aimant (EM), dont les valeurs comptées sont stockées dans une mémoire (1), avec la valeur de position d'un détecteur de position fine (21) captant les mouvements du corps en une valeur de position totale cohérente, **caractérisé en ce que** une manipulation de la valeur comptée est corrigée, **en ce que** la direction d'aimantation du fil Wiegand (Wg1, Wg2) du capteur Wiegand (Ws1, Ws2) est déterminée, et **en ce que** à un temps Tx au moyen de la direction d'aimantation du fil Wiegand, la dernière valeur comptée du compteur à segments de la mémoire (1) et l'information du capteur de position fine (21) est déterminée, au moyen du segment actuel ≤ moitié, si la valeur comptée peut être utilisée directement à partir de la mémoire (1) ou si on doit déduire ou additionner à la valeur comptée de la mémoire (1) « 1 », à cet effet on peut lire un tableau (6), dans lequel sont mémorisées des informations de correction pour toutes les séries de mouvements et positions finales d'aimant d'excitation (EM) au temps Tx basé sur le signal (A, B) pour le comptage dérivé du signal Wiegand (Ua, Ub) de la direction d'aimantation du fil Wiegand (Wg1, Wg2) et le dernier état de comptage.

2. Procédé selon la revendication 1, **caractérisé en ce que** une bobine d'induction qui entoure le fil Wiegand (Wg1, Wg2) est mise sous tension de manière définie afin de constater si les aimants élémentaires du fil Wiegand (Wg1, Wg2) sont provoqués à se rabattre, un signal de réaction est délivré à une électronique d'exploitation (1 à 13), ayant une impulsion ou pas.

3. Procédé selon la revendication 2, **caractérisé en ce que** le capteur Wiegand (Ws1, Ws2) présente une première et une deuxième bobine d'induction enroulées sur le fil Wiegand (Wg1, Wg2), la première bobine d'induction (Es1, Es2) est mise sous tension et une impulsion de déclenchement est mesurée sur la deuxième bobine d'induction (Sp1, Sp2).

4. Procédé selon la revendication 2, **caractérisé en ce que** le capteur Wiegand (Ws1, Ws2) présente une seule bobine d'induction (Sp1, Sp2) enroulée sur le fil Wiegand (Wg1, Wg2), ladite bobine d'induction est utilisée pour la mise sous tension ainsi que pour mesurer l'impulsion de déclenchement.

5. Procédé selon la revendication 2 à 4, **caractérisé en ce que** la mise sous tension de la bobine d'induction s'effectue de manière croissante et descendante sous la forme d'une rampe.

6. Procédé selon la revendication 1, **caractérisé en ce que** la direction d'aimantation du fil Wiegand (Wg1, Wg2) est mesurée au moyen d'au moins un capteur (Ms1, Ms2) sensible aux champs magnétiques assigné au fil Wiegand (Wg1, Wg2).

7. Procédé selon la revendication 6, **caractérisé en ce que** une sonde Hall ou un capteur GMR sont utilisés comme capteur sensible aux champs magnétiques.
